# EUROPÄISCHE PATENTANMELDUNG

(11) **EP 0 941 898 A1**
(43) Veröffentlichungstag der Anmeldung: **15.09.1999**
(21) Anmeldenummer: 99102516.4
(22) Anmeldetag: 10.02.1999
(51) Int. Cl.: B60R 22/24

(54) **Umlenkbeschlag für einen Sicherheitsgurt**

(30) Priorität: 10.03.1998 DE 19810380
(71) Anmelder: Bayerische Motoren Werke Aktiengesellschaft, 80788 München (DE)
(72) Erfinder: Sertl, Hans Peter, 95478 Kemnath (DE)

(57) **Zusammenfassung**

Es wird ein Umlenkbeschlag für einen Sicherheitsgurt (20), insbesondere für ein Kraftfahrzeug beschrieben, mit einem Gurtführungsschlitz (2), durch den der Sicherheitsgurt (20) hindurchgeführt ist, wobei der Gurtführungsschlitz (2) eine Unterkante (3) aufweist, die als Gurtumlenksteg (4) ausgebildet ist und eine Oberkante (5) besitzt, die vom Gurtumlenksteg (4) mindestens so weit beabstandet ist, daß eine Gurtführungsschlitzbreite entsteht, die es erlaubt, daß der Sicherheitsgurt (20) durch den Gurtführungsschlitz (2) unbehindert hindurchgezogen werden kann. Dabei schließt an den Gurtführungsschlitz (2) auf mindestens einer Seite ein Gurtanlaufschlitz (9) an, mit einer inneren (6) und einer äußeren Kante (7), die an die Oberkante (5) bzw. Unterkante (3) des Gurtführungsschlitzes (2) anschließen und im weiteren Verlauf ineinander übergehen. Die Gurtanlaufschlitzbreite ist größer als die Gurtführungsschlitzbreite und der Umlenkbeschlag besitzt im Bereich der Oberkante (5) des Gurtführungsschlitzes (2) und der inneren Kante (6) des Gurtanlaufschlitzes (9), mindestens am Übergang des Gurtführungsschlitzes (2) zum Gurtanlaufschlitz (9) einen Vorsprung (10) in Gurtbandauszugsrichtung, der ein Verdrehen des Gurtbandes (20) beim Gurtbandeinzug dadurch verhindert, daß das Gurtband (20) mit seiner zu der Oberkante (5) gerichteten Seite an ihm anläuft.

## Beschreibung

### [Stand der Technik]

Die Erfindung beschreibt einen Umlenkbeschlag für einen Sicherheitsgurt nach dem Oberbegriff des Hauptanspruchs. Es ist bereits bekannt, einen Umlenkbeschlag für einen Sicherheitsgurt so zu gestalten, daß das Gurtband nicht verdreht oder verwunden wird und ein Einreißen an einem dem Querabschnitt des Gurtbandes verhindert wird.

Die DE 41 15 897 A1 beschreibt einen solchen Umlenkbeschlag, bei dem zu diesem Zweck ein Auslaufteil an wenigstens einem Ende der Führungsöffnung für den Sicherheitsgurt vorgesehen ist, wobei ein Vorsprung auf dem Verbindungsabschnitt zwischen dem Auslaufteil und der Führungsöffnung vorgesehen ist. Dieser Vorsprung erstreckt sich in Richtung des Verlaufs der Führungsöffnung und verengt diese am Übergang zum Auslaufteil auf einen Zwischenraum, der kleiner als das zweifache der Dicke des Gurtbandes und größer als die Dicke des Gurtbandes ist. Dadurch wird das Verdrehen oder Verwinden des Gurtbandes verhindert, allerdings mit dem Nachteil, daß das Gurtband nicht immer in seine Ausgangslage zurückgeworfen wird.

Desweiteren resultiert durch die geringe Spaltbreite in den Auslaufaugen ein erhöhter Rückzugswiderstand des Gurtbandes. Dieser ist darauf zurückzuführen, daß das Gurtband unter Belastung mit seiner Innenfläche gegen den Vorsprung gedrückt wird und an diesem reibt. Dadurch kann beim normalen Ein- und Ausziehen des Sicherheitsgurtbandes ein erhöhter Kraftbedarf notwendig werden. Besonders beim Einziehen, das ja durch eine vorgespannte Feder im Gurtautomaten bewirkt wird, sind Schwierigkeiten zu erwarten, da die Rückzugskraft dieser Feder möglichst gering dimensioniert werden sollte, um bei angelegtem Sicherheitsgurt das haptische Tragegefühl durch geringen Anpreßdruck möglichst angenehm zu gestalten.

### [Aufgabe der Erfindung]

Deshalb hat die Erfindung die Aufgabe einen Umlenkbeschlag bereitzustellen, der ein ungehindertes, leichtes Ein- und Ausziehen des Gurtbandes eines Sicherheitsgurts im normalen Gebrauch gewährleistet, wobei gleichzeitig ein Verdrehen und Verklemmen des Gurtbandes im Umlenkbeschlag zuverlässig verhindert wird. Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung ist der Sicherheitsgurt, insbesondere eines Kraftfahrzeugs, durch einen Gurtführungsschlitz eines Umlenkbeschlages hindurchgeführt, wobei der Gurtführungsschlitz eine Unterkante aufweist, die als Gurtumlenksteg ausgebildet ist und eine Oberkante besitzt, die vom Gurtumlenksteg mindestens so weit beabstandet ist, daß eine Gurtführungsschlitzbreite entsteht, die es erlaubt, daß der Sicherheitsgurt durch den Gurtführungsschlitz unbehindert hindurchgezogen werden kann. Auf mindestens einer Seite schießt an den Gurtführungsschlitz ein Gurtanlaufschlitz an, mit einer inneren Kante und einer äußeren Kante, die an die Oberkante bzw. Unterkante des Gurtführungsschlitzes anschließen und im weiteren Verlauf ineinander übergehen, wobei die Gurtanlaufschlitzbreite größer ist als die Gurtführungsschlitzbreite. Zur Erzielung des gewünschten Erfolgs besitzt der Umlenkbeschlag im Bereich der Oberkante des Gurtführungsschlitzes und der inneren Kante des Gurtanlaufschlitzes, mindestens am Übergang des Gurtführungsschlitzes zum Gurtanlaufschlitz, einen Vorsprung in Gurtbandauszugsrichtung, der ein Verdrehen des Gurtbandes des Sicherheitsgurts beim Gurtbandeinzug dadurch verhindert, daß das Gurtband mit seiner zu der Oberkante gerichteten Seite an ihm anläuft.

Das hat den Vorteil, daß die Anlaufschlitzbreite größer als die doppelte Dicke des Gurtbandes gewählt werden kann, was gewährleistet, daß dieses trotz seiner großen Quersteifigkeit mit seiner Oberfläche nicht in Berührung mit der inneren Kante des Gurtanlaufschlitzes kommt. Das Verklemmen bzw. Verdrehen des Sicherheitsgurtbandes wird durch den Vorsprung in Gurtbandauszugsrichtung verhindert, der beim Aufrollvorgang als Gurtbandrückwerfer dient und durch Zurückdrehen des Sicherheitsgurtbandes in seine Ausgangslage einen sicheren Aufrollvorgang gewährleistet. Der Vorsprung in Gurtbandauszugsrichtung greift unter eine sich verdrehende Gurtbandkante und wirft diese in ihre Ausgangslage zurück.

Bei einer vorteilhaften Ausführung der Erfindung ist der Vorsprung zylinderförmig, in Gurtbandauszugsrichtung abgerundet ausgebildet, mit dem Vorteil, daß dadurch ein besonders schonender Umgang mit dem Gurtband erreicht wird.

Bei einer weiteren vorteilhaften Ausführung der Erfindung schließt auf beiden Seiten des Gurtführungsschlitzes ein Gurtanlaufschlitz an, wobei sich an beiden Übergängen des Gurtführungsschlitzes zu den Gurtanlaufschlitzen jeweils ein Vorsprung in Gurtbandauszugsrichtung befindet. Das hat den Vorteil, daß das Sicherheitsgurtband in beide mögliche Richtungen ausgelenkt werden kann, wobei in jeder Richtung ein Verdrehen und Verklemmen des Sicherheitsgurtbandes verhindert wird.

Bei einer bevorzugten Ausführung der Erfindung gehen beide Vorsprünge ineinander über, indem die Oberkante des Gurtführungsschlitzes insgesamt als Vorsprung in Gurtbandauszugsrichtung ausgebildet ist. Dies ergibt eine optisch besonders ansprechende Form des Umlenkbeschlages, bei der der Zweck des Vorsprungs nicht unbedingt sofort sichtbar ist.

Bei einer weiteren bevorzugten Ausführungsform der Erfindung ist ein solcher Umlenkbeschlag mit einem Befestigungsbereich oberhalb des Gurtführungsschlitzes zu seiner um einen Befestigungsmittelpunkt verdrehbaren Befestigung, insbesondere an einer Kraftfahrzeugkarosserie, versehen. Dabei ist der Befestigungsbereich in Bezug auf den Gurtführungsschlitz so angeordnet, daß bei am Insassen angelegtem Sicherheitsgurt die Verlängerung der Symmetrielängsachse des Sicherheitsgurtbandes, in Gurtbandeinzugsrichtung gesehen, durch den Befestigungsmittelpunkt verläuft.

Vorteilhafterweise wird dabei das Gurtband des Sicherheitsgurtes durch den verdrehbaren Umlenkbeschlag so geführt, daß ein Verdrehen bzw. Verklemmen des Sicherheitsgurtbandes zusätzlich noch dadurch verhindert wird, daß die resultierende Kraft am Sicherheitsgurtband kein Momentenungleichgewicht am Umlenkbeschlag bewirkt. Eine solche Anordnung am Umlenkbeschlag kann zum Beispiel dadurch erreicht werden, daß der zu seiner in Richtung des Befestigungsbereichs verlaufenden Quermittenachse symmetrisch ausgebildete Gurtführungsschlitz so angeordnet ist, daß der Befestigungsmittelpunkt außerhalb einer senkrecht zum Umlenkbeschlag verlaufenden Ebene entlang dieser Quermittenachse liegt.

Vier bevorzugte Ausführungsbeispiele der Erfindung sind in der nachfolgenden Beschreibung und der zugehörigen Zeichnung näher dargestellt. Es zeigen:

### [Beispiele]

- Figur 1: drei Abbildungen, eine Draufsicht und zwei Querschnitte (A-A, B-B), eines Umlenkbeschlages für einen Sicherheitsgurt entsprechend der Erfindung,
- Figur 2: eine weitere Ausführungsform eines Umlenkbeschlages entsprechend der Erfindung, ebenfalls falls in Draufsicht und in zwei Querschnitten (A-A, B-B),
- Figur 3 und Figur 4: jeweils eine Draufsicht auf einen Umlenkbeschlag in einer Ausführungsform entsprechend Figur 2, allerdings mit verändertem Sicherheitsgurtverlauf bzw. verändertem Befestigungsbereich. In Figur 4 ist zusätzlich, zum besseren Verständnis, beispielhaft für jede Draufsicht in allen Figuren, ein Sicherheitsgurt durch den Umlenkbeschlag hindurchgeschleift eingezeichnet.

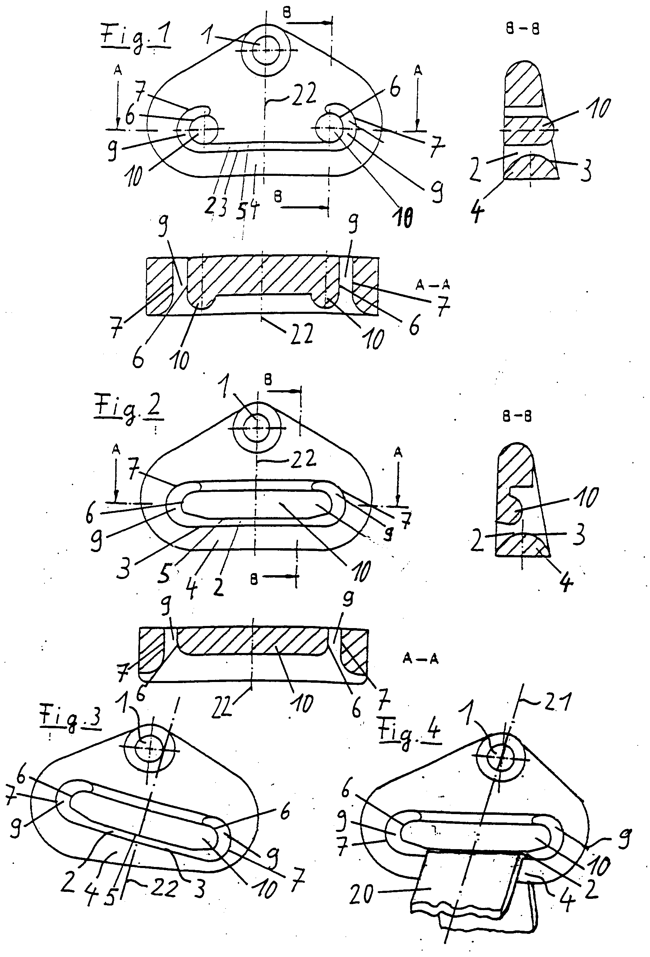

Figur 1 zeigt in einer Draufsicht, in einem Querschnitt A-A und in einem Querschnitt B-B, einen Umlenkbeschlag für einen, in Figur 4 für alle Figuren beispielhaft durch diesen hindurchgeschleift teilweise gezeichneten, Sicherheitsgurt 20. Der Umlenkbeschlag besitzt eine Bohrung 1 zu seiner verdrehbaren Befestigung an einer nicht gezeichneten Kraftfahrzeugkarosserie, zum Beispiel durch eine nicht gezeichnete Schraube. Die Bohrung 1 liegt in einem Befestigungsbereich des Umlenkbeschlages, oberhalb eines Gurtführungsschlitzes 2, durch den der Sicherheitsgurt 20 hindurchgeschleift gehalten und geführt wird. Das Zentrum der Bohrung 1 ist Befestigungsmittelpunkt, um den der Umlenkbeschlag verdrehbar an der Kraftfahrzeugkarosserie befestigt ist.

Der Sicherheitsgurt 20 ist so durch den Gurtführungsschlitz 2 hindurchgeschleift, daß er, aus der Zeichenebene der Draufsicht heraustretend, zu einem nicht gezeichneten anschnallbaren Insassen geführt werden kann, indem er, aus der Zeichenebene heraus, durch den Gurtführungsschlitz 2 ausgezogen wird. In Gegenrichtung, in die Zeichenebene hinein, erfolgt der Gurtbandeinzug des Sicherheitsgurtes 20, der meist automatisch nach dem Lösen eines nicht gezeichneten Gurtschlosses erfolgt, indem das ausgezogene Gurtband durch den Gurtführungsschlitz 2 hindurchgezogen und dabei auf einer nicht gezeichneten Aufwickeleinrichtung eines Sicherheitsgurtautomaten aufgerollt wird. Der automatische Einzug des Sicherheitsgurtes 20 wird meist durch eine Rückstellfeder im Sicherheitsgurtautomaten bewirkt, die beim Auszug des Sicherheitsgurtes 20 vorgespannt wurde und dadurch eine Aufwickelrolle des Sicherheitsgurtautomaten in Aufwickelrichtung antreiben kann.

Der Gurtführungsschlitz 2 weist eine Unterkante 3 auf, die als Gurtumlenksteg 4 ausgebildet ist. Auf dieser Unterkante 3 gleitend, wird der Sicherheitsgurt 20 in Gurtbandauszugsrichtung, aus der Zeichenebene heraus, zum Anschnallen eines Insassen ausgezogen, während er bei seinem Einzug in den Sicherheitsgurtautomaten in die Zeichenebene hinein eingezogen wird. Um die Reibung des Gurtbandes des Sicherheitsgurtes 20 an dem Gurtumlenksteg 4 zu minimieren, ist dieser abgerundet ausgebildet. Damit der Sicherheitsgurt 20 durch den Gurtführungsschlitz 2 unbehindert hindurchgezogen werden kann, ist dessen Oberkante 5 mindestens etwas mehr als die Gurtbanddicke des Sicherheitsgurtes 20 von der Unterkante 3 des Gurtumlenkstegs 4 beabstandet.

Damit das Gurtband des Sicherheitsgurtes 20 bei dessen Ausbzw. Einzug auch zur Seite hin ausweichen kann, was für bestimmte Kräfteverhältnisse notwendig ist, um ein Blockieren des Gurtbandes zu verhindern, schließt an den Gurtführungsschlitz 2 links und rechts jeweils ein Gurtanlaufschlitz 9 an, mit einer weiteren Oberkante 6 und einer weiteren Unterkante 7. Die weitere Unterkante 7 geht direkt in die Oberkante 5 des Gurtführungsschlitzes 2 über, ebenso die weitere Oberkante 6 in die Unterkante 3. In ihrem Verlauf, von dem Gurtführungsschlitz 2 wegweisend, geht die weitere Oberkante 6 in einem Radius 8 in die weitere Unterkante 7 über. Dabei ist die Gurtanlaufschlitzbreite größer als die Gurtführungsschlitzbreite.

Um zu verhindern, daß sich das Gurtband des Sicherheitsgurtes 20 im Gurtführungsschlitz 2 oder im Gurtanlaufschlitz 9 verdreht und/oder verklemmt, ist am Übergang des Gurtführungsschlitzes 2 zum Gurtanlaufschlitz 9, im Bereich der Oberkante 5 und der weiteren Unterkante 7 ein Vorsprung 10 in Gurtbandauszugsrichtung angebracht, der ein Verdrehen des Gurtbandes des Sicherheitsgurtes 20 bei dessen Einzug dadurch verhindert, daß das Gurtband mit seiner zu der Oberkante 5 gerichteten Seite an ihm anläuft. Der Vorsprung 10 ist zylinderförmig, in Gurtbandauszugsrichtung abgerundet ausgebildet.

Figur 2 zeigt entsprechend Figur 1 eine andere Ausführungsform des Umlenkbeschlages in drei entsprechenden Abbildungen. Die Bezugsziffern sind gleich gewählt und die Funktion ist dieselbe wie unter Figur 1 beschrieben. Der Unterschied besteht in der Ausführung des Umlenkbeschlages. Es ist die Oberkante des Gurtführungsschlitzes 2 insgesamt als Vorsprung 10 in Gurtbandauszugsrichtung ausgebildet.

Figur 3 und Figur 4 zeigen jeweils eine Abwandlung des erfindungsgemäßen Umlenkbeschlages aus Figur 2, die dazu dient, bei einem Unfall das Abrutschen des Gurtbandes des Sicherheitsgurtes 20 auf dem Gurtumlenksteg 4 und damit ein Abkippen des Umlenkbeschlages um seinen Befestigungsmittelpunkt zu verhindern. Das Verhindern eines solchen Abrutschvorganges durch die Geometrie des Umlenkbeschlages vermeidet ein Einziehen des Gurtbandes in den Gurtanlaufschlitz 9 und so eine unerwünscht große Flächenpressung zwischen Umlenkbeschlag und Gurtband. Ebenso wird eine Verseilung des Gurtbandes vermieden, durch die sich die auf dem Oberkörper des angeschnallten Insassen aufliegende Sicherheitsgurtfläche verringert, was deren Belastung beim Zurückhalten erhöht.

Dazu ist bei der Ausführungsform nach Figur 4 die Bohrung 1 in Bezug auf den Gurtführungsschlitz 2 so angeordnet, daß bei durch den Insassen angelegtem Sicherheitsgurt 20 die Verlängerung einer Symmetrielängsachse 21 des Gurtbandes, in Gurtbandeinzugsrichtung gesehen, durch den Befestigungsmittelpunkt verläuft. Zur besseren Darstellung ist der Verlauf der Symmetrielängsachse 21 strichpunktiert gezeichnet.

Bei der Ausführungsform nach Figur 3 ist der Gurtführungsschlitz 2 zu seiner in Richtung des Befestigungsbereichs verlaufenden Quermittenachse 22 ebenfalls symmetrisch ausgebildet, aber der Befestigungsmittelpunkt liegt außerhalb einer senkrecht zum Umlenkbeschlag verlaufenden Ebene entlang dieser Quermittenachse 22.

## Patentansprüche

1. Umlenkbeschlag für einen Sicherheitsgurt (20), insbesondere für ein Kraftfahrzeug, mit einem Gurtführungsschlitz (2), durch den der Sicherheitsgurt (20) hindurchgeführt ist, wobei der Gurtführungsschlitz (2) eine Unterkante (3) aufweist, die als Gurtumlenksteg (4) ausgebildet ist und eine Oberkante (5) besitzt, die vom Gurtumlenksteg (4) mindestens so weit beabstandet ist, daß eine Gurtführungsschlitzbreite entsteht, die es erlaubt, daß der Sicherheitsgurt (20) durch den Gurtführungsschlitz (2) unbehindert hindurchgezogen werden kann, und mit mindestens einem auf mindestens einer Seite an den Gurtführungsschlitz (2) anschließenden Gurtanlaufschlitz (9), mit einer inneren Kante (6) und einer äußeren Kante (7), die an die Oberkante (5) bzw. Unterkante (3) des Gurtführungsschlitzes (2) anschließen und im weiteren Verlauf ineinander übergehen, wobei die Gurtanlaufschlitzbreite größer ist als die Gurtführungsschlitzbreite, dadurch gekennzeichnet, daß der Umlenkbeschlag im Bereich der Oberkante (5) des Gurtführungsschlitzes (2) und der inneren Kante (6) des Gurtanlaufschlitzes (9), mindestens am Übergang des Gurtführungsschlitzes (2) zum Gurtanlaufschlitz (9), einen Vorsprung (10) in Gurtbandauszugsrichtung besitzt, der ein Verdrehen des Gurtbandes des Sicherheitsgurtes (20) beim Gurtbandeinzug dadurch verhindert, daß das Gurtband mit seiner zu der Oberkante (5) gerichteten Seite an ihm anläuft.

2. Umlenkbeschlag nach Anspruch 1, dadurch gekennzeichnet, daß der Vorsprung (10) zylinderförmig, in Gurtbandauszugsrichtung abgerundet ausgebildet ist.

3. Umlenkbeschlag nach Anspruch 1 oder 2, dadurch gekennzeichnet, daß auf beiden Seiten des Gurtführungsschlitzes (2) ein Gurtanlaufschlitz (9) anschließt, und daß sich an beiden Übergängen des Gurtführungsschlitzes (2) zu den Gurtanlaufschlitzen (9) jeweils ein Vorsprung (10) in Gurtbandauszugsrichtung befindet.

4. Umlenkbeschlag nach Anspruch 3, dadurch gekennzeichnet, daß die beiden Vorsprünge (10) ineinander übergehen, indem die Oberkante (5) des Gurtführungsschlitzes (2) insgesamt als Vorsprung (10) in Gurtbandauszugsrichtung ausgebildet ist.

5. Umlenkbeschlag nach einem der Ansprüche 1 bis 4, mit einem Befestigungsbereich oberhalb des Gurtführungsschlitzes (2) zu seiner um einen Befestigungsmittelpunkt verdrehbaren Befestigung, insbesondere an einer Kraftfahrzeugkarosserie, dadurch gekennzeichnet, daß der Befestigungsbereich in Bezug auf den Gurtführungsschlitz (2) so angeordnet ist, daß bei am Insassen angelegtem Sicherheitsgurt (20) die Verlängerung der Symmetrielängsachse (21) des Sicherheitsgurtbandes in Gurtbandeinzugsrichtung gesehen durch den Befestigungsmittelpunkt verläuft.

6. Umlenkbeschlag nach Anspruch 5, dadurch gekennzeichnet, daß der Gurtführungsschlitz (2) zu seiner in Richtung des Befestigungsbereichs verlaufenden Quermittenachse (22) symmetrisch ausgebildet ist und daß der Befestigungsmittelpunkt außerhalb einer senkrecht zum Umlenkbeschlag verlaufenden Ebene entlang dieser Quermittenachse (22) liegt.
